# FASCICULE DE BREVET EUROPEEN

(11) **EP 1 772 302 B1**
(45) Date de publication et mention de la délivrance du brevet: **02.07.2008**
(21) Numéro de dépôt: 06360046.4
(22) Date de dépôt: 04.10.2006
(51) Int. Cl.: B60K 15/03

(54) **Protection anti-effraction du passage de jauge ou du bouchon de vidange pour un réservoir de carburant**
Diebstahlsicherung eines Messgeräts und einer Ablassschraube eines Kraftstoffbehälters
Anti-theft protection of a gauge and draining plug for a fuel tank

(30) Priorité: 04.10.2005 FR 0510123
(43) Date de publication de la demande: 11.04.2007
(73) Titulaire: MOUGENOT PROTECTION INNOVATION, 88560 Saint Maurice sur Moselle (FR)
(72) Inventeur: Mougenot Philippe, 88560 Saint Maurice sur Moselle (FR)
(74) Mandataire: Metz, Paul

(56) Documents cités:
- PATENT ABSTRACTS OF JAPAN vol. 1998, no. 10, 31 août 1998 (1998-08-31) -& JP 10 117553 A (MITSUBISHI AGRICULT MACH CO LTD), 12 mai 1998 (1998-05-12)
- PATENT ABSTRACTS OF JAPAN vol. 1998, no. 05, 30 avril 1998 (1998-04-30) -& JP 10 014364 A (MITSUBISHI AGRICULT MACH CO LTD), 20 janvier 1998 (1998-01-20)
- PATENT ABSTRACTS OF JAPAN vol. 009, no. 316 (M-438), 12 décembre 1985 (1985-12-12) -& JP 60 151128 A (NISSAN JIDOSHA KK), 9 août 1985 (1985-08-09)

## Description

La présente invention concerne une protection anti-effraction de l'orifice du passage de jauge et des conduits d'aspiration et de refoulement du carburant, ainsi qu'une protection du bouchon de vidange pour le réservoir de carburant d'un véhicule routier, notamment d'un camion.

Une telle protection anti-effraction est déjà connue par le document JP 10117553.

De nos jours, avec le prix sans cesse croissant des carburants, on constate de plus en plus de vols de carburant par siphonnage du réservoir des véhicules, notamment des camions qui en contiennent généralement de grandes quantités.

Il subsiste donc un besoin de plus en plus important pour des dispositifs anti-effraction visant à empêcher le siphonnage des réservoirs.

Il existe déjà de nombreux dispositifs anti-effraction pour l'orifice de remplissage des réservoirs, mais à l'heure actuelle ceux-ci s'avèrent insatisfaisants car la jauge et le bouchon de vidange des réservoirs sont généralement accessibles depuis l'extérieur sur les camions et non protégés donc vulnérables vis-à-vis d'un siphonnage potentiel.

En effet, la jauge des réservoirs comprend généralement une partie plongeuse partiellement immergée dans le réservoir, reliée à un moyen de mesure qui est prolongé à l'extérieur par une liaison indiquant le niveau de carburant au conducteur du véhicule. Il est souvent possible d'extraire cette jauge par décentrage hors de l'orifice dans lequel elle est montée, même s'il est parfois nécessaire pour cela de forcer le support. Un accès au réservoir est alors libéré par lequel le siphonnage peut être possible.

L'aspiration du carburant pour alimenter le moteur s'effectue généralement également par cet endroit.

De même, alors que l'orifice de vidange n'est prévu que pour le vidage du réservoir, comme il est généralement accessible depuis l'extérieur, il peut aussi servir à un éventuel siphonnage.

Il existe donc le besoin d'un dispositif anti-effraction permettant d'empêcher l'extraction de la jauge hors de son orifice et le dévissage du bouchon de vidange.

Avantageusement, selon l'invention, il s'agit d'un même modèle de dispositif anti-effraction pouvant servir à la fois de protection contre l'extraction de la jauge et contre le dévissage du bouchon de vidange.

Pour résoudre ces divers problèmes techniques, la présente invention propose une plaque en tôle solidarisée à la paroi adjacente du réservoir et présentant une déformation en logement prévue pour recouvrir la partie extérieure de la jauge ou le bouchon de vidange afin d'en rendre l'extraction impossible et ainsi la libération du passage.

Préférentiellement réalisée à partir d'une bande de tôle en acier inoxydable ou galvanisé pliée ou cintrée afin de former une saillie fermée et renforcée par une ou deux plaque(s) latérale(s), la protection anti-effraction selon l'invention est simple à réaliser, peu coûteuse et d'une réalisation suffisamment solide pour résister à la plupart des tentatives d'effraction.

Une fois rapportée sur le réservoir et solidarisée à celui-ci, par exemple par collage ou soudage, la protection anti-effraction selon l'invention peut être difficilement enlevée sans destruction et sans bruit, ce qui suffit alors à dissuader les voleurs et ainsi à empêcher la grande majorité des tentatives d'effraction.

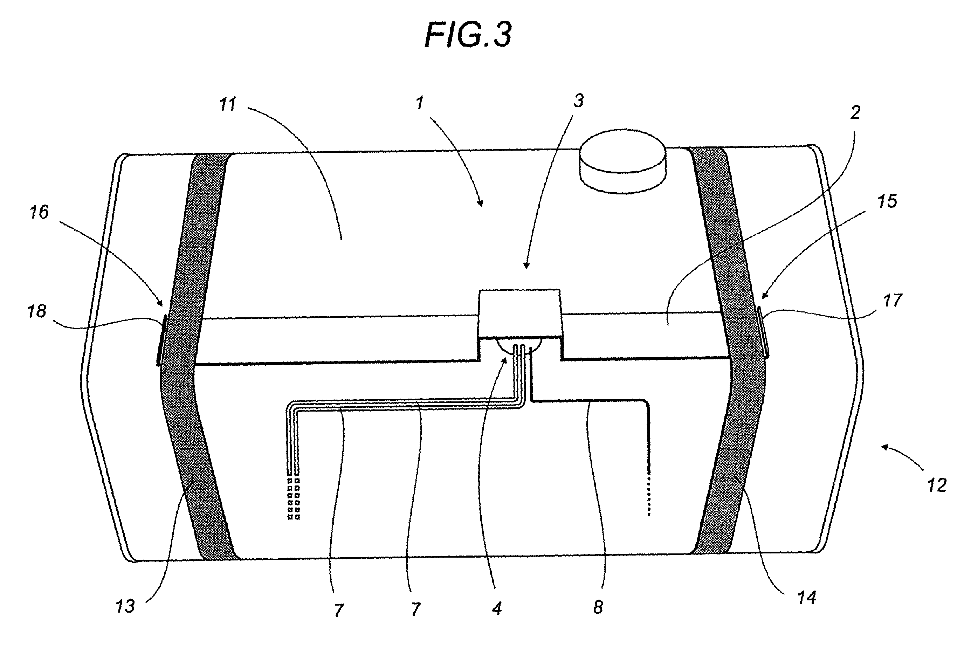

D'autres caractéristiques et avantages de l'invention apparaîtront à la lecture de la description détaillée qui va suivre, description faite en référence aux dessins annexés, dans lesquels :

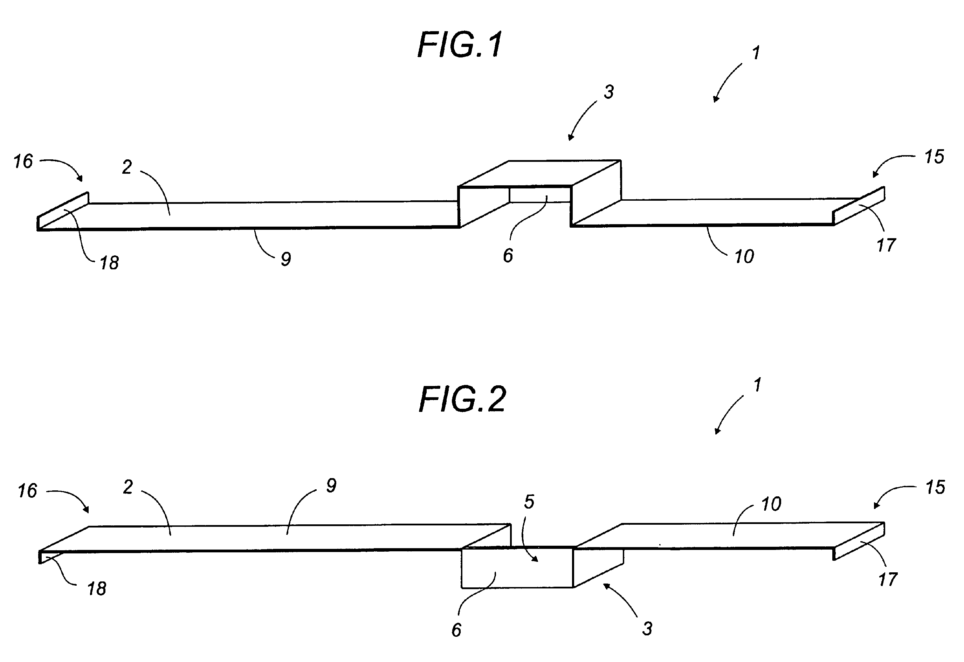

la figure 1 est une représentation en perspective d'ensemble vue de dessus d'une protection anti-effraction selon l'invention ;
. la figure 2 est une représentation en perspective d'ensemble vue de dessous d'une protection anti-effraction selon l'invention ; et
. la figure 3 est une vue en perspective d'ensemble de l'arrière d'une protection anti-effraction selon l'invention montée sur la jauge d'un réservoir et immobilisée à chacune de ses extrémités par l'appui forcé d'une sangle et par un bord transversal relevé.

La protection anti-effraction selon la présente invention va maintenant être décrite de façon détaillée en référence aux figures 1 à 3. Les éléments équivalents représentés sur les différentes figures porteront les mêmes références numériques.

La protection anti-effraction 1 selon l'invention est préférentiellement réalisée à partir d'une bande de tôle 2 de préférence en métal.

Cette bande de tôle 2 en métal, par exemple en acier inoxydable ou galvanisé d'une épaisseur de sensiblement 20/10^{e}, est pliée ou cintrée afin de former une saillie de protection anti-effort 3 en forme de bouclier formant boîtier anti-effraction présentant un volume suffisant pour loger la partie saillante d'une jauge 4 ou d'un bouchon de vidange.

Cette saillie de protection anti-effraction 3 peut être fermée sur l'une de ses faces latérales 5 ou sur les deux faces latérales à l'aide d'une plaque d'obturation 6 afin d'empêcher l'accès à la partie saillante de la jauge 4 ou à un bouchon de vidange.

Dans le cas de la protection de la partie saillante de la jauge 4, il peut être nécessaire de garder un côté de la saillie de protection anti-effraction 3 ouvert pour le passage des conduites 7 ou des liaisons électriques 8. Dans ce cas, la saillie de protection anti-effraction 3 est fermée uniquement sur l'un de ses côtés 5.

La plaque d'obturation 6 est préférentiellement fabriquée dans la même matière que celle de la bande de tôle 2 en métal et est préférentiellement solidarisée à cette dernière par soudage.

Outre sa fonction d'obturation latérale de la saillie de protection anti-effraction 3, chaque plaque 6 d'obturation sert également de renfort pour la saillie 3, rendant ainsi la structure de cette dernière plus résistante à la destruction et à la déformation afin de dissuader les voleurs de passer à l'action.

Dans un mode de réalisation préféré, représenté sur les figures 1 et 2, la saillie de protection anti-effraction 3 se présente sous la forme d'un parallélépipède et les plaques d'obturation 6 se présentent sous la forme d'un rectangle.

Dans un mode de réalisation préféré, les faces inférieures 9, 10 de la bande de tôle 2 de l'invention sont fixées ou solidarisées de manière inamovible contre la paroi 11 du réservoir par un moyen quelconque, par exemple 12 soit par collage ou soudage, soit par une bande double face de forte adhérence sur chaque face.

Généralement, les réservoirs de carburant 12 des camions sont immobilisés sur un support solidarisé au châssis à l'aide de deux ou plusieurs sangles 13, 14 de maintien. Lorsque la protection anti-effraction 1 du passage de jauge et du bouchon de vidange est montée sur un tel réservoir de carburant 12, ces sangles 13, 14 sont montées au-dessus du dispositif, c'est-à-dire qu'elles viennent recouvrir les zones d'extrémité, notamment les extrémités 15, 16 de la bande, procurant alors un maintien supplémentaire et empêchant mieux le retrait de la protection anti-effraction 1 de l'invention.

Dans un mode de réalisation préféré, la plaque de tôle 2 de la protection anti-effraction 1 selon l'invention présente à chacune des extrémités 15, 16 un côté transversal à rebord relevé 17, 18 formant un rebord relevé de chant par exemple par pliage, préférentiellement sensiblement à angle droit constituant avec la sangle adjacente une butée de maintien-arrêt en cas de soulèvement de la bande 2. Ces rebords relevés de chant 17, 18 ont pour fonction de recevoir à calage le bord externe de chaque sangle de maintient 13, 14 du réservoir de carburant 12. Ainsi, les sangles 13, 14 peuvent encore moins être coulissées latéralement, ce qui empêche l'enlèvement forcé de la protection anti-effraction 1 de l'invention.

De fait, comme cela peut être vu sur la figure 3, les sangles 13, 14 et la protection anti-effraction 1 de l'invention, par ses rebords relevés de chant 17, 18, assurent un maintien-arrêt mutuel qui empêche tout retrait par coulissement sous la sangle de la protection anti-effraction 1 de l'invention.

Ce blocage mutuel peut être encore renforcé en rabattant ou en recourbant les rebords relevés des bords transversaux sur la sangle adjacente.

Ainsi, de par son collage ou soudage sur la paroi adjacente du réservoir et son maintien par les sangles 13, 14, il devient extrêmement difficile d'ôter la protection anti-effraction 1 de l'invention, même à l'aide d'un pied de biche.

Cette protection 1 offre donc une solution anti-effraction parfaitement adaptée à la protection du passage de jauge 4 et du bouchon de vidange pour le réservoir de carburant 12 d'un camion.

On peut également envisager de nombreuses variantes des modes de réalisation précédents sans s'écarter de la portée de l'invention.

On peut par exemple réaliser la protection anti-effraction en aluminium ou en matière polymère haute densité.

## Revendications

1. Dispositif de protection anti-effraction (1) contre l'extraction de la jauge ou l'enlèvement du bouchon de vidange, monté contre la paroi latérale (11) d'un réservoir de carburant (12), **caractérisé en ce qu'**il comprend une bande de tôle (2) pliée ou cintrée afin de former une saillie de protection (3) en forme de boîtier anti-effraction présentant un volume suffisant pour loger la partie saillante d'une jauge et/ou d'un bouchon de vidange, cette bande de tôle étant rapportée de manière inamovible sur la paroi latérale (11) du réservoir de carburant (12).

2. Dispositif de protection anti-effraction (1) selon la revendication 1, **caractérisé en ce que** la plaque de tôle (2) est recouverte au moins à chacune de ses deux zones d'extrémité par au moins une des au moins deux sangles (13, 14) de maintien et d'immobilisation du réservoir de carburant (12), ces au moins deux sangles (13, 14) venant recouvrir les extrémités (15, 16) de la plaque de tôle pour les plaquer contre la surface latérale (11) du réservoir (12).

3. Dispositif de protection anti-effraction (1) selon la revendication précédente, **caractérisé en ce que** la plaque de tôle (2) présente à chacune de ses extrémités (15, 16) un côté transversal à rebord relevé (17, 18) formant un rebord relevé de chant pour la bande constituant avec la sangle une butée de maintien-arrêt en cas de soulèvement de la bande (2), ces rebords relevés de chant (17, 18) étant prévus pour recevoir à calage le bord externe des sangles de maintien (13, 14) du réservoir de carburant (12) le long de leur face arrière.

4. Dispositif de protection anti-effraction (1) selon la revendication précédente, **caractérisé en ce que** les rebords relevés (17, 18) sont pliés sensiblement à angle droit.

5. Dispositif de protection anti-effraction (1) selon la revendication précédente, **caractérisé en ce que** les rebords relevés des bords transversaux sont rabattus ou recourbés sur la face supérieure de la sangle adjacente.

6. Dispositif de protection anti-effraction (1) selon l'une quelconque des revendications précédentes, **caractérisé en ce que** la saillie de protection anti-effraction (3) se présente sous la forme d'un parallélépipède.

7. Dispositif de protection anti-effraction (1) selon l'une quelconque des revendications précédentes, **caractérisé en ce que** les faces inférieures (9, 10) de la bande de tôle (2) sont fixées ou solidarisées contre ou à la paroi (11) du réservoir (12) par collage ou soudage.

8. Dispositif de protection anti-effraction (1) selon l'une quelconque des revendications précédentes, **caractérisé en ce que** les faces inférieures (9, 10) de la bande de tôle (2) sont fixées contre la paroi (11) du réservoir (12) par une bande collante double face de forte adhérence sur chaque face.

9. Dispositif de protection anti-effraction (1) selon la revendication précédente, **caractérisé en ce que** la bande de tôle (2) est en acier inoxydable ou galvanisé.

10. Dispositif de protection anti-effraction (1) selon l'une quelconque des revendications précédentes, **caractérisé en ce que** la saillie de protection anti-effraction (3) est fermée sur au moins une de ses faces latérales (5) à l'aide d'une plaque d'obturation (6).

## Claims

1. Anti-theft protective device (1) against the extraction of the level gauge or the removal of the oil discharge cap, mounted to the side-wall (11) of a fuel tank (12), **characterised in that** it includes a sheet strip (2) folded or bent in order to form a protection protrusion (3) in the form of anti-theft box with a sufficient volume for lodging the protruding part of a level gauge and/or of an oil discharge cap, in which this sheet strip is applied in a firm way on the side-wall (11) of the fuel tank (12).

2. Anti-theft protective device (1), according to claim 1, **characterised in that** the sheet metal plate (2) is covered at least at each of its two end zones by means of at least one of the at least two belts (13, 14) holding and immobilizing the fuel tank (12), in which these at least two belts (13, 14) cover the ends (15, 16) of the sheet metal plate so that they adhere to the side surface (11) of the tank (12).

3. Anti-theft protective device (1), according to the previous claim, **characterised in that** the sheet metal plate (2) presents at each end (15, 16) a transverse side with raised turn-up (17, 18) forming a cut raised turn-up intended for the plate constituting together with the belt a holding-stop rabbet in case of the lifting of the strip (2), in which these cut raised edges (17, 18) are provided for the adjustment of the external border of the holding belts (13, 14) of the fuel tank (12) along their back side.

4. Anti-theft protective device (1), according to the previous claim, **characterised in that** the raised edges (17, 18) are folded in a precise right-angle.

5. Anti-theft protective device (1), according to the previous claim, **characterised in that** the raised edges of the transverse edges are refolded or bent on the upper side of the adjacent belt.

6. Anti-theft protective device (1), according to any of the previous claims, **characterised in that** the anti-theft protection protrusion (3) appears in the form of a parallelepiped.

7. Anti-theft protective device (1) according to any of the previous claims, **characterised in that** the sheet strip's (2) lower sides (9, 10) are fixed or solidarized to the wall (11) of the tank (12) by means of sticking or welding.

8. Anti-theft protective device (1), according to any of the previous claims, **characterised in that** the sheet strip's (2) lower sides (9, 10) are fixed to the wall (11) of the tank (12) by means of a double-sided glue strip with strong adhesive on each face.

9. Anti-theft protective device (1) according to the previous claim, **characterised in that** the sheet strip (2) is made of galvanized or stainless steel.

10. Anti-theft protective device (1), according to any of the previous claims, **characterised in that** the anti-theft protection protrusion (3) is closed on at least one of its lateral sides (5) with the aid of a closing plate (6).

## Patentansprüche

1. Vorrichtung zur Diebstahlsicherung (1) gegen die Entnahme des Messgeräts oder die Entfernung der Ablassschraube, die gegen die Seitenwand (11) eines Kraftstoffbehälters (12) montiert ist, **gekennzeichnet dadurch, dass** sie ein gebogenes oder gewölbtes Blechband (2) umfasst, um einen Schutzaufbau (3) in Form eines Diebstahlschutzgehäuses zu bilden, das ein ausreichendes Volumen aufweist, um das vorstehende Teil eines Messgeräts und/oder einer Ablassschraube unterzubringen, wobei dieses Blechband unbeweglich auf der Seitenwand (11) des Kraftstoffbehälters (12) eingebracht ist.

2. Vorrichtung zur Diebstahlsicherung (1) nach Anspruch 1, **gekennzeichnet dadurch, dass** die Blechplatte (2) mindestens an jedem ihrer zwei Endbereichen durch mindestens einen der mindestens zwei Trag- und Halteriemen (13, 14) des Kraftstoffbehälters (12) abgedeckt ist, wobei diese mindestens zwei Riemen (13, 14) die Enden (15, 16) der Blechplatte bedecken, um sie gegen die Seitenfläche (11) des Behälters (12) aufzudrücken.

3. Vorrichtung zur Diebstahlsicherung (1) nach dem vorangehenden Anspruch, **gekennzeichnet dadurch, dass** die Blechplatte (2) an jedem ihrer Enden (15, 16) eine Querseite mit angehobenem Rand (17, 18) aufweist, um einen angehobenen Kantenrand für das Band zu bilden, das mit dem Riemen einen Anhalteanschlag beim Hochheben des Bandes (2) bildet, wobei diese angehobenen Kantenränder (17, 18) für die Aufnahme der Keilverbindung des äußeren Randes der Halteriemen (13, 14) des Kraftstoffbehälters (12) entlang ihrer Hinterseite vorgesehen sind.

4. Vorrichtung zur Diebstahlsicherung (1) nach dem vorangehenden Anspruch, **gekennzeichnet dadurch, dass** die angehobenen Ränder (17, 18) im rechten Winkel leicht gebogen sind.

5. Vorrichtung zur Diebstahlsicherung (1) nach dem vorangehenden Anspruch, **gekennzeichnet dadurch, dass** die angehobenen Ränder der Querränder auf der Oberseite des benachbarten Riemens umgeklappt oder umgebogen sind.

6. Vorrichtung zur Diebstahlsicherung (1) nach einem der vorangehenden Ansprüche, **gekennzeichnet dadurch, dass** der Diebstahlschutz (3) die Form eines Quaders hat.

7. Vorrichtung zur Diebstahlsicherung (1) nach einem der vorangehenden Ansprüche, **gekennzeichnet dadurch, dass** die Unterseiten (9, 10) des Blechbandes (2) gegen die oder an der Wand (11) des Behälters (12) befestigt werden oder durch Kleben oder Schweißung untereinander verbunden werden.

8. Vorrichtung zur Diebstahlsicherung (1) nach einem der vorangehenden Ansprüche, **gekennzeichnet dadurch, dass** die Unterseiten (9, 10) des Blechbandes (2) gegen die Wand (11) des Behälters (12) durch ein doppelseitiges Klebeband mit starker Anhaftungsfähigkeit auf jeder Seite befestigt werden.

9. Vorrichtung zur Diebstahlsicherung (1) nach dem vorangehenden Anspruch, **gekennzeichnet dadurch, dass** das Blechband (2) aus rostfreiem oder galvanisiertem Stahl ausgeführt ist.

10. Vorrichtung zur Diebstahlsicherung (1) nach einem der vorangehenden Ansprüche, **gekennzeichnet dadurch, dass** der Diebstahlschutz (3) auf mindestens einer seiner Seiten (5) mit Hilfe einer Verschlussplatte (6) verschlossen ist.
